# EUROPÄISCHE PATENTSCHRIFT

(11) **EP 0 776 606 B1**
(45) Veröffentlichungstag und Bekanntmachung des Hinweises auf die Patenterteilung: **19.12.2001**
(21) Anmeldenummer: 96117956.1
(22) Anmeldetag: 08.11.1996
(51) Int. Cl.: A23B 4/06, A23B 4/07

(54) **Verfahren zur Konservierung, zum Transport und zur Handhabung von Fleisch- oder Wurstwaren**
Process for preservation, transport and storing of meat and sausages
Procédé de conservation, transport et stockage de produit à base de viandes et de saucisse

(30) Priorität: 10.11.1995 DE 19541972
(43) Veröffentlichungstag der Anmeldung: 04.06.1997
(73) Patentinhaber: Zimbo fleisch- und Wurstwaren GmbH & Co. KG, 44805 Bochum (DE)
(72) Erfinder: Zimmermann, Reinhold, 58511 Lüdenscheid (DE)
(74) Vertreter: Schneiders, Josef, Dipl.-Ing.

(56) Entgegenhaltungen:
- DE-A- 2 633 377
- US-A- 4 025 656
- US-A- 5 141 761

## Beschreibung

Die Erfindung betrifft ein Verfahren zur Konservierung, zum Transport und zur Handhabung von Fleisch- oder Wurstwaren, bei welchem die Fleisch- oder Wurstwaren beim Hersteller in dünne Scheiben geschnitten, scheibenweise einzeln tiefgefroren und voneinander getrennt in einer Transportverpackung verpackt, in einer ununterbrochenen Tiefkühlkette vom Hersteller zum Endverbraucher transportiert und beim Endverbraucher einzeln Scheibe für Scheibe aus der Transportverpackung entnommen werden.

Ein Verfahren der angegebenen Art ist beispielsweise aus der US-A-5 141 761 bekannt. Bei diesem nach dem Stande der Technik bekannten Verfahren wird Bacon (Speck oder Schinkenspeck) in verhältnismäßig dünne Scheiben geschnitten, die dann einzeln in eine mikrowellenfeste Folie eingewickelt werden. Um den Einwickelvorgang zu erleichtern, werden die einzelnen Scheiben vor dem Einwickeln mit flüssiger Kohlensäure tiefgefroren. Hierdurch werden die einzelnen Scheiben so steif, daß sie sich leichter einwickeln lassen. Danach werden die eingewickelten Scheiben in eine Transportverpackung gegeben, aus der sie vom Endverbraucher einzeln wieder entnommen werden können, um sie vor dem Verzehr in einem Mikrowellenherd eingewickelt in der mikrowellenfesten Folie kochen oder braten zu können. Die Folie ist mit Löchern versehen, über die die während des Kochens oder Bratens aus dem Bacon austretenden überschüssigen Flüssigkeitsmengen in eine aus saugfähigem Material bestehende Unterlage abfließen können.

Bei einem anderen nach dem Stande der Technik (DE-A-43 26 850) bekannten Verfahren werden getrocknete Fleisch- oder Wurstwaren in verzehrfertige, dünne Scheiben geschnitten und nach dem Schneiden für kurze Zeit erhitzt und getrocknet. Die Erhitzung und Trocknung bewirken einerseits eine Verformung der Scheiben zu einer stabilen, in mehreren Richtungen räumlich gekrümmten Form und andererseits eine Keimabtötung an den Oberflächen der Scheiben. Die derart gekrümmten und durch Erhitzen und Trocknen konservierten Scheiben werden - ggf. unter Schutzgas - in eine luftdicht verschließbare Transportverpackung gegeben, aus der sie vom Endverbraucher einzeln Scheibe für Scheibe entnommen werden können. Von besonderem Vorteil ist, daß die einzelnen Scheiben aufgrund ihrer stabilen, verkrümmten Form in der Transportverpackung nicht aneinander kleben und deshalb ohne Hilfsmittel mit einer Hand aus der Transportverpackung entnommen werden können. Hierdurch wird die Handhabung dieser Fleisch- und Wurstwaren beim Endverbraucher, beispielsweise beim Verteilen auf die Eßgeschirre oder beim Belegen von Broten außerordentlich erleichtert.

Das zuletzt genannte Verfahren hat allerdings den Nachteil, daß es nur für luftgetrocknete Fleisch- und Wurstwaren geeignet ist. Für andere Fleisch- und Wurstwaren, wie z.B. streichfähige Rohwürste, Brühwürste, Kochwürste wie Leberwurst, Blutwurst, Sülzwurst oder Preßwurst und Fleischerzeugnisse wie Pasteten und dergleichen ist es demgegenüber ungeeignet, weil diese Produkte nicht getrocknet werden können, ohne eine nachteilige Veränderung zu erfahren oder ohne ihre typischen Eigenschaften zu verlieren.

Nach dem Stand der Technik ist es auch bekannt, Frischfleisch und ggf. auch Hackfleisch durch Tiefgefrieren haltbar zu machen. Dabei muß nach den einschlägigen Vorschriften (vgl. z.B § 3 der Hackfleischverordnung) das Hackfleisch unmittelbar nach seiner Herstellung mit einer Geschwindigkeit von mindestens 1cm in der Stunde auf eine Kerntemperatur von weniger als -18°C gebracht werden. Bereits bei dieser verhältnismäßig geringen Gefriergeschwindigkeit ist gewährleistet, daß die insbesondere an den Oberflächen der Fleischpartikel befindlichen Mikroorganismen rechtzeitig soweit inaktiviert werden, daß sie sich nicht vermehren können und somit das eingefrorene Hackfleisch für lange Zeit lagerfähig bleibt.

Beim Einfrieren von Fleisch mit der vom Gesetz vorgeschriebenen Mindest-Gefriergeschwindigkeit ergibt sich aber das Problem, daß sich während des Einfriervorganges die Moleküle des im Fleisch vorhandenen Wassers zu verhältnismäßig großen Eiskristallen organisieren, wodurch die zurückbleibenden Restlösungen aufkonzentriert werden, so daß deren Gefrierbeginn zu tieferen Temperaturen verschoben wird. Die sich ausbildenden Konzentrationsunterschiede führen zu osmotischen Vorgängen durch die Zellwände hindurch und zur Zerstörung der Zellwände, so daß sich irreversible Veränderungen an dem Fleisch ergeben. Die Folge ist, daß aus dem auftauenden Fleisch in größeren Mengen Zellflüssigkeit austritt und die Konsistenz und das Aussehen des Fleisches leiden. Solche Defizite kann man bei Fleisch, welches anschließend einer Weiterbehandlung durch Kochen, Schmoren oder Braten zugeführt wird, noch in Kauf nehmen. Bei Fleisch- oder Wurstwaren der oben genannten Art, die nach dem Auftauen ohne weitere Verarbeitung direkt dem Verzehr zugeführt werden, wären solche Veränderungen hingegen nicht akzeptabel. Beim Einfrieren von Wurst mit der für Fleisch vorgeschriebenen Mindest-Gefriergeschwindigkeit ergibt sich zusätzlich das Problem, daß durch die Ausbildung von großen Eiskristallen die typischen Strukturen der Wurstmasse, wie z.B. Emulsionen, Gelbildungen und Strukturen durch Eiweißgerinnung, sogenannte Eiweißgitter, zerstört oder nachteilig verändert werden. Aus diesem Grunde werden solche Fleisch- und Wurstwaren nach dem Stande der Technik nicht durch Gefrieren haltbar gemacht, sondern werden durch geeignete Verfahren, wie z. B. Salzen, Räuchern, Erhitzen, Säuern oder Fermentieren konserviert, im Stück transportiert und erst unmittelbar vor dem Verzehr in verzehrfertige Scheiben aufgeschnitten.

Das hat gravierende Nachteile, und zwar insbesondere dann, wenn die Endverbraucher Einrichtungen für die Gemeinschaftsverpflegung sind, z.B. Krankenhäuser, Altersheime, Pflegeheime, Kantinen, Bordküchen von Schiffen oder Flugzeugen oder dergleichen. Wollen solche Einrichtungen ein differenziertes Angebot an Fleisch- und Wurstwaren bereithalten, müssen sie entsprechende Vorräte der einzelnen Fleisch- und Wurstsorten auf Lager halten und unmittelbar vor dem Verzehr mit dafür geeigneten Maschinen unter Einhaltung strenger hygienischer Vorschriften aufschneiden und verteilen. Diese Vorschriften sind in jüngster Zeit durch das Inkrafttreten der strengen EG-Richtlinie über Lebensmittelhygiene vom 14.06.1993 erheblich verschärft worden. Diese Richtlinie fordert von den Betreibern solcher Einrichtungen eine Feststellung der kritischen Punkte im Prozeßablauf nach dem sogenannten HACCP-System (Hazard Analysis and Critical Control Points) und eine ständige Kontrolle und Überwachung dieser kritischen Punkte. Solche kritischen Punkte sind beim Aufschneiden und Weiterverarbeiten von Fleisch- und Wurstwaren insbesondere die Schneidemaschine und die hinter der Schneidemaschine befindlichen Ablagen, die ständig kontrolliert, überwacht und gereinigt werden müssen, zum Teil sogar beim Wechsel zwischen verschiedenen Fleisch- und Wurstsorten. So enthalten z.B. bestimmte durch Fermentation gereifte Rohwürste Lactobazillen, die z. B. Kochschinken sehr schnell verderben lassen. Da auch solche Kreuzkontaminationen vermieden werden müssen, muß die Aufschnittmaschine praktisch nach jedem Schneidvorgang gründlich gereinigt werden, was natürlich mit einem großen Personalaufwand verbunden ist.

Die geschilderten Schwierigkeiten haben zum Ergebnis, daß es in Einrichtungen für die Gemeinschaftsverpflegung außerordentlich schwierig ist, für die zu versorgenden Personen ein breit gefächertes Sortiment an Wurst- und Fleischwaren bereit zu halten. Oft verdirbt in solchen Einrichtungen ein großer Teil von den Fleisch- oder Wurstsorten, die von den zu versorgenden Personen nur selten nachgefragt werden.

Es ist Aufgabe der Erfindung, ein Verfahren der eingangs genannten Art zu schaffen, welches es ermöglicht, dem Endverbraucher schonend konservierte Fleisch- oder Wurstwaren beliebiger Konsistenz in Form von verzehrfertigen dünnen Scheiben zur Verfügung zu stellen, die unmittelbar einzeln verwendet werden können. Insbesondere soll es durch das Verfahren gemäß der Erfindung ermöglicht werden, in Einrichtungen für die Gemeinschaftsverpflegung den Personalaufwand für die Einhaltung der strengen lebensmittelhygienischen Vorschriften zu vermindern.

Gegenstand der Erfindung ist ein Verfahren zur Konservierung, zum Transport und zur Handhabung von Fleisch- oder Wurstwaren, bei welchem die Fleisch- oder Wurstwaren beim Hersteller in dünne Scheiben geschnitten, scheibenweise einzeln tiefgefroren und voneinander getrennt in einer Transportverpackung verpackt, in einer ununterbrochenen Tiefkühlkette vom Hersteller zum Endverbraucher transportiert und beim Endverbraucher einzeln Scheibe für Scheibe aus der Transportverpackung entnommen werden, wobei sich dieses Verfahren dadurch kennzeichnet,
a.) daß die Fleisch- oder Wurstwaren in verzehrfertigem Zustand eingefroren werden,
b.) daß die Dicke der Scheiben und die Kühlleistung der Kühleinrichtung so aufeinander abgestimmt sind, daß in jeder Scheibe in weniger als 10 sec. eine Kerntemperatur von weniger als -18°C und in weniger als 30 sec. eine Kerntemperatur von weniger als -60°C erreicht werden,
c.) daß die tiefgefrorenen Scheiben in der Transportverpackung unmittelbar übereinander gestapelt werden,
d.) und daß beim Endverbraucher der verzehrfertige Zustand durch Auftauen bei Zimmertemperatur unmittelbar vor dem Verzehr wieder hergestellt wird.

Bei Einhaltung der erfindungsgemäß vorgeschlagenen großen Gefriergeschwindigkeit haben die verzehrfertig geschnittenen Scheiben nach dem Auftauen die gleiche Konsistenz wie die frische Ware und verlieren auch ihr appetitliches Aussehen nicht. Das ist darauf zurückzuführen, daß bei der sehr schnellen Abkühlung auf Temperaturen unter -60°C die Beschädigung an Zellmembranen, Emulsionen, Gelbildungen oder Eiweißgittern der Fleisch- oder Wurstwaren besonders gering sind, weil die Temperatur im Bereich des sogenannten kryohydratischen Punktes liegt, bei welchem die oben diskutierten Konzentrationsverschiebungen durch Eiskristallbildung nicht mehr stattfinden. Diese sehr niedrige Temperatur braucht nur kurzzeitig eingehalten zu werden. Eine spätere Anhebung der Temperatur bis auf -18°C, beispielsweise im Bereich der nachfolgenden Kühlkette, ist für das Aussehen und die Konsistenz der Fleisch- oder Wurstwaren unschädlich.

Vorteilhaft ist weiterhin, daß strenge lebensmittelhygienische Vorschriften ohne zusätzlichen Personalaufwand eingehalten werden können. Außerdem kommt man beim Verfahren gemäß der Erfindung im Vergleich zum Stand der Technik mit weniger konservierenden Maßnahmen aus, so daß dieses Verfahren z. B. besonders für Fleisch- oder Wurstwaren geeignet ist, die im Rahmen einer kochsalzarmen Diät verabreicht werden.

Dadurch, daß die Scheiben beim Endverbraucher unmittelbar vor dem Verzehr einzeln aufgetaut werden, ergibt sich eine außerordentlich vereinfachte Handhabung. Da aus den einzelnen Scheiben beim Auftauen kein Wasser austritt, kann man die einzelnen Scheiben ohne weiteres unaufgetaut auf das Eß- oder Serviergeschirr oder direkt auf die zu belegenden Brotscheiben auflegen. Die einzelnen Fleisch- oder Wurstscheiben tauen bei Zimmertemperatur sehr schnell auf und sind auf jeden Fall aufgetaut, bevor das Eß- oder Serviergeschirr oder die belegten Brote in einer Gemeinschaftsverpflegungseinrichtung bis zu den Essern gelangen.

Dadurch, daß die Scheiben mit großer Geschwindigkeit einzeln eingefroren werden und erst im bereits tiefgefrorenen Zustand in der Transportverpackung übereinander gestapelt werden, wird wirksam verhindert, daß die übereinander gestapelten Scheiben aneinander festfrieren. Damit dies nicht nachfolgend während des Transports passiert, muß allerdings sichergestellt sein, daß die Gefrierkette bis zum Endverbraucher ununterbrochen ist. Bei Einhaltung dieser Bedingung können die Scheiben vom Endverbraucher bequem aus der Transportverpackung herausgenommen werden, dabei vereinzelt werden und sofort auf das Eß- oder Serviergeschirr oder auf die zu belegenden Brote aufgelegt werden.

Eine bevorzugte Ausführungsform des Verfahrens gemäß der Erfindung sieht vor, daß die Tiefkühlung auf einem Kontakt-Plattenkühler erfolgt, auf dessen Kühlplatten die verzehrfertig geschnittenen Scheiben flächig aufgelegt werden. Mit solchen Plattenkühlern ist es möglich, den verzehrfertig geschnittenen Scheiben in ihrem gesamten Volumen sehr schnell viel Wärme zu entziehen. Dabei werden die verhältnismäßig dünnen Scheiben durch Flächenkontakt mit der Kühlplatte in ihrer Form stabilisiert, nehmen also die Form der Oberflächen der Kühlplatte an.

Um zu verhindern, daß die in den Transportverpackungen befindlichen, gefrorenen Scheiben bei kurzzeitigen Unterbrechungen in der Kühlkette antauen, ist weiterhin vorgesehen, daß die Transportverpackung wärmeisolierend ausgebildet ist. Eine solche Wärmeisolierung der Transportverpackung verhindert mit ausreichender Wirksamkeit, daß zur Unzeit Wärme an die tiefgefrorenen Scheiben gelangt.

Weiterhin ist vorgesehen, daß die tiefgefrorenen Scheiben in der Transportverpackung unter Luftabschluß oder einem Schutzgas gehalten werden, welches im wesentlichen aus Stickstoff und/oder Kohlendioxid besteht. Ein solches Schutzgas oder Luftabschluß verhindern, daß die freiliegenden Oberflächen der tiefgefrorenen Scheiben durch Luftsauerstoff oxidiert werden, durch Wasserverdunstung austrocknen oder sich durch kondensierenden Wasserdampf mit Eiskristallen überziehen.

Schließlich ist vorgesehen, daß das Aufschneiden, Tiefgefrieren und Verpacken der Fleisch- und Wurstwaren beim Hersteller unter Reinraumbedingungen erfolgen. Unter Reinraumbedingungen werden solche Raumbedingungen verstanden, die die Ausbildung und Verbreitung von Keimen so gut wie möglich unterbinden. Dies geschieht beispielsweise dadurch, daß die Temperatur und Luftfeuchtigkeit entsprechend geregelt werden, keimtötende Luftfilter vorgesehen werden, für einen schnellen Ablauf von Wasch- und Reinigungsflüssigkeit gesorgt wird und alle Oberflächen so gestaltet werden, daß die Ansiedlung von Keimen nur schlecht möglich ist. Durch diese Maßnahmen wird vermieden, daß schon beim Hersteller Keime in die Produkte eingetragen werden, die nach dem Auftauen der Scheiben aktiv werden.

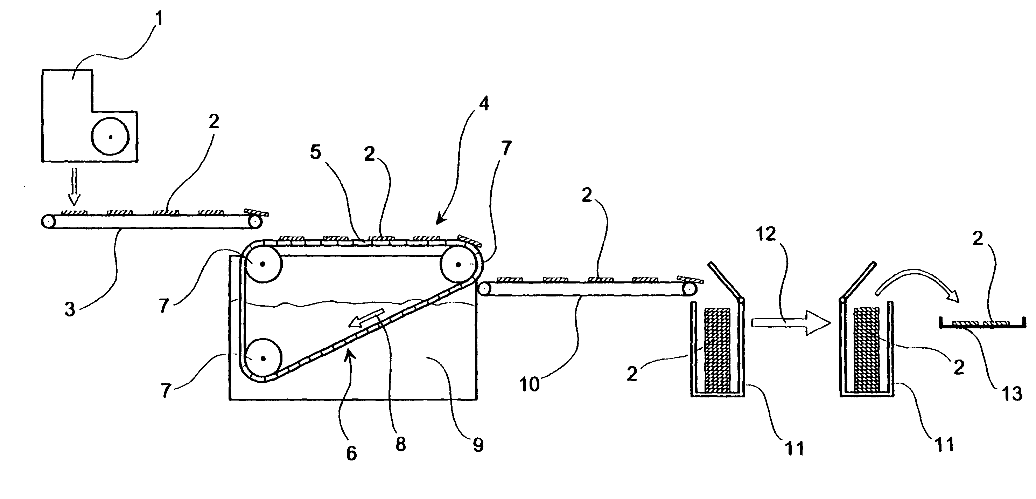

Ein Ausführungsbeispiel der Erfindung wird im folgenden anhand der Zeichnung näher erläutert, die in ihrer einzigen Abbildung schematisch den Ablauf des Verfahrens gemäß der Erfindung darstellt.

In der Zeichnung ist eine Schneidemaschine für Fleisch- oder Wurstwaren mit dem Bezugszeichen 1 bezeichnet. Mit Hilfe dieser Schneidemaschine 1 werden die angelieferten Wurst- oder Fleischstücke vollautomatisch in verzehrfertige, dünne Scheiben 2 geschnitten. Die Schneidemaschine 1 gibt die fertig geschnittenen Scheiben 2 einzeln und kontinuierlich aufeinanderfolgend auf ein Förderband 3 auf, welches die fertig geschnittenen Scheiben einzeln und aufeinanderfolgend einer Tiefkühleinrichtung 4 zuführt.

Die Tiefkühleinrichtung 4 ist als Kontakt-Plattenkühler ausgebildet und weist ein aus Kühlplatten 5 zusammengesetztes Plattenband 6 auf, welches um drei Führungsrollen 7 in Richtung des Pfeiles 8 umläuft. Die Kühlplatten 5 des Plattenbandes 6 haben eine hohe Wärmeleitfähigkeit und werden dadurch auf einer extrem niedrigen Temperatur gehalten, daß das Untertrum des Plattenbandes 6 durch ein flüssiges Kältemittel 9, beispielsweise durch flüssigen Stickstoff geführt wird.

Auf das an der Oberseite der Kühleinrichtung 4 verlaufende Obertrum des Plattenbandes 6 werden die verzehrfertig geschnittenen Scheiben 2 wiederum einzeln und kontinuierlich aufeinanderfolgend aufgelegt und entlang der Oberseite der Tiefkühleinrichtung bis zum Abwurfende des Plattenbandes 6 gefördert. Dabei kühlen sich die aufliegenden Scheiben 2 durch Kontakt mit den extrem kalten Kühlplatten 5 sehr schnell ab. Gemäß der Erfindung sind die Temperatur, die Wärmeaufnahmefähigkeit und die Wärmeleitfähigkeit der Kühlplatten 5 einerseits und die Dicke der Scheiben andererseits so aufeinander abgestimmt, daß im Volumen der Scheiben 2 innerhalb von weniger als 10 sec. eine Kerntemperatur von weniger als -18°C erreicht wird. Eine derartige Abkühlgeschwindigkeit reicht schon aus, die Bildung von großen Eiskristallen in den verzehrfertig geschnittenen Wurst- oder Fleischscheiben zu unterbinden. Durch Einstellung einer noch größeren Abkühlgeschwindigkeit, nämlich auf weniger als -60°C innerhalb von weniger als 30 sec., wird die Qualität der Kühlware noch weiter gesteigert.

Die auf diese Weise sehr schnell tiefgefrorenen Scheiben werden über ein Transportband 10 tiefgekühlt in Transportverpackungen 11 gegeben, die luftdicht verschließbar sind. In diese Transportverpackungen kann ggf. zusätzlich ein Schutzgas aus Stickstoff und/oder Kohlensäure gegeben werden, welches Oxidationserscheinungen an den Oberflächen der Scheiben 2 verhindert. Außerdem können die Transportverpackungen 11 außen wärmeisoliert sein, um bei kurzzeitigen Unterbrechungen in der nachfolgenden Tiefkühlkette Wärme von den verpackten tiefgefrorenen Scheiben 2 fernzuhalten.

Der Transport und die Verteilung der verschlossenen Transportbehälter 11 erfolgt in einer ununterbrochenen Tiefkühlkette, in der entsprechend den gesetzlichen Vorschriften nirgendwo die Höchsttemperatur von -18°C überschritten wird. Diese Tiefkühlkette ist in der Zeichnung mit dem Doppelpfeil 12 symbolisiert und endet beim Endverbraucher.

Beim Endverbraucher werden die tiefgefrorenen Scheiben 2 einzeln aus den Transportverpackungen 11 entnommen und auf ein Eß- oder Serviergeschirr 13 oder direkt auf zu belegende Brote aufgelegt. Die Scheiben 2 werden also unmittelbar vor dem Verzehr einzeln bei Zimmertemperatur aufgetaut. Der Auftauvorgang wird dadurch beschleunigt, daß die verhältnismäßig dünnen, verzehrfertigen Scheiben 2 flächig auf den jeweiligen Unterlagen aufliegen und den Unterlagen verhältnismäßig schnell die zum Auftauen erforderlichen Wärme entnehmen. Die derart aufgetauten Scheiben 2 sondern keine Flüssigkeit ab und behalten das ursprüngliche frische und appetitliche Aussehen.

Das Aufschneiden und Einfrieren der Fleisch- und Wurstwaren erfolgt direkt beim Hersteller unter besten hygienischen Bedingungen in speziell vorbereiteten Reinräumen, so daß die Keimbelastung von vornherein sehr gering ist. Der Eintrag von neuen Keimen oder die Vermehrung von vorhandenen Keimen können also beim Verfahren gemäß der Erfindung erst kurz vor dem Verzehr auftreten, so daß man beim Verfahren gemäß der Erfindung weitgehend ohne oder auf jeden Fall mit schonenderen Konservierungsmaßnahmen auskommt, als bei der herkömmlichen Herstellung und Distribution von Wurstwaren.

## Patentansprüche

1. Verfahren zur Konservierung, zum Transport und zur Handhabung von Fleisch- oder Wurstwaren, bei welchem die Fleisch- oder Wurstwaren beim Hersteller in dünne Scheiben (2) geschnitten, scheibenweise einzeln tiefgefroren und von einander getrennt in einer Transportverpackung (11) verpackt, in einer ununterbrochenen Tiefkühlkette (12) vom Hersteller zum Endverbraucher transportiert und beim Endverbraucher einzeln Scheibe für Scheibe aus der Transportverpackung (11) entnommen werden,
**dadurch gekennzeichnet**,
a.) daß die Fleisch- oder Wurstwaren in verzehrfertigem Zustand eingefroren werden,
b.) daß die Dicke der Scheiben (2) und die Kühlleistung der Kühleinrichtung (4) so aufeinander abgestimmt sind, daß in jeder Scheibe (2) in weniger als 10sec. eine Kerntemperatur von weniger als -18°C und in weniger als 30 sec. eine Kemtemperatur von weniger als -60°C erreicht werden,
c.) daß die tiefgefrorenen Scheiben (4) in der Transportverpackung unmittelbar übereinander gestapelt werden,
d.) und daß beim Endverbraucher der verzehrfertige Zustand durch Auftauen beim Zimmertemperatur unmittelbar vor dem Verzehr wieder hergestellt wird.

2. Verfahren nach Anspruch 1, **dadurch gekennzeichnet, daß** die Tiefkühlung auf einem Kontakt-Plattenkühler erfolgt, auf dessen Kühlplatten (5) die verzehrfertig geschnittenen Scheiben (2) flächig aufgelegt werden.

3. Verfahren nach den Ansprüchen 1 oder 2, **dadurch gekennzeichnet, daß** die Transportverpackungen (11) wärmeisolierend ausgebildet sind.

4. Verfahren nach einem der Ansprüche 1 bis 3, **dadurch gekennzeichnet, daß** die tiefgefrorenen Scheiben (2) in der Transportverpackung (11) unter Luftabschluß oder einen Schutzgas gehalten werden, welches im wesentlichen aus Stickstoff und/oder Kohlendioxid besteht.

5. Verfahren nach einem der Ansprüche 1 bis 3, **dadurch gekennzeichnet, daß** das Aufschneiden, Tiefgefrieren und Verpacken der Fleisch- oder Wurstwaren beim Hersteller unter Reinraumbedingungen erfolgt.

## Claims

1. A method of preserving, transporting and handling meat or sausage items, in which at the manufacturer the meat or sausage items are cut into thin slices (2), frozen individually in slices and packaged separately from each other in a transportation packaging (11), transported from the manufacturer to the end consumer in an uninterrupted frozen chain (12) and at the end consumer removed individually slice by slice from the transportation packaging (11),
**characterised in that**
a) the meat or sausage items are frozen in the ready-to-eat condition,
b) the thickness of the slices (2) and the freezing capacity of the freezing apparatus (4) are so matched to each other that in each slice (2) a core temperature of less than -18°C is reached in less than 10 seconds and a core temperature of less than -60°C is reached in less than 30 seconds,
c) the frozen slices (4) are stacked directly one upon the other in the transportation packaging, and
d) at the end consumer the ready-to-eat condition is restored by thawing at room temperature immediately prior to consumption.

2. A method according to claim 1 **characterised in that** the freezing operation is effected on a contact plate freezer, on the freezing plates (5) of which the slices (2) cut ready-to-eat are laid flat.

3. A method according to claim 1 or claim 2 **characterised in that** the transportation packagings (11) are heat-insulating.

4. A method according to one of claims 1 to 3 **characterised in that** the frozen slices (2) are kept in the transportation packaging (11) with the exclusion of air or in a protective gas which substantially comprises nitrogen and/or carbon dioxide.

5. A method according to one of claims 1 to 3 **characterised in that** the procedure of cutting up the meat or sausage items, freezing them and packaging them is effected at the manufacturer under clean room conditions.

## Revendications

1. Procédé de conservation, de transport et de la manutention de viandes ou de saucisses, consistant à ce que les viandes ou les saucisses sont découpées chez le fabricant en de fines tranches (2), surgelées individuellement en tranches et emballées séparément dans un emballage de transport (11), transportées dans une chaine de froid (12) continue du fabricant au consommateur final et sorties de leurs emballages de transport (11) tranche par tranche chez le consommateur final,
**caractérisé en ce que**
a) les viandes ou saucisses sont surgelées dans un état prêt à être consommées,
b) l'épaisseur des tranches (2) et la performance frigorifique du dispositif frigorifique (4) sont adaptées l'une à l'autre de façon à ce que, dans moins de 10 secondes, une température intérieure inférieure à -18°C et dans moins de 30 secondes une température intérieure inférieure à -80°C soit atteinte dans chaque tranche (2),
c) les tranches surgelées (4) sont empilées directement les unes sur les autres dans l'emballage de transport,
d) l'état prêt à être consommé est de nouveau atteint chez le consommateur final par décongélation à la température ambiante.

2. Procédé selon la revendication 1, **caractérisé en ce que** la surgélation est effectuée sur un réfrigérateur à plaques de contact sur les plaques frigorifiques (5) duquel les tranches prêtes à être consommées (2) sont disposées planes.

3. Procédé selon l'une des revendications 1 ou 2, **caractérisé en ce que** les emballages de transport (11) sont constitués calorifuges.

4. Procédé selon l'une quelconque des revendications 1 à 3, **caractérisé en ce que** les tranches surgelées (2) sont maintenues, dans leur emballages de transport (11), sous vide ou sous un gaz de protection consistant essentiellement en azote et / ou d'oxyde de carbone.

5. Procédé selon l'une quelconque des revendication 1 à 3, **caractérisé en ce que** la découpe, la congélation et l'emballage des viandes ou saucisses sont effectuées chez le fabricant sous des conditions de salle blanche.
